# EUROPEAN PATENT APPLICATION

(11) **EP 2 740 930 A1**
(43) Date of publication of application: **11.06.2014**
(21) Application number: 12819896.7
(22) Date of filing: 02.08.2012
(51) Int. Cl.: F03D 3/04, F03D 9/00

(54) **WIND ENERGY GENERATOR ON A WIND-HARNESSING PLATFORM**

(30) Priority: 04.08.2011 BR PI1104101; 31.01.2012 BR
(71) Applicant: Botelho, Paulo, 18703-730 Avaré (BR)
(72) Inventor: Botelho, Paulo, 18703-730 Avaré (BR)
(74) Representative: Spengler, Robert
(86) International application number: PCT/BR2012/000272
(87) International publication number: WO 2013/016796

(57) **Abstract**

The present invention relates to an electric energy generator that uses wind energy as the energy source, transforming the wind energy into electric energy. The aim of the present patent is to provide an electric energy generator driven by wind energy that can be installed in locations having a regular flow of air, either on land or on offshore platforms. When on land, the generator is preferably placed at the top of hills, mountains or valleys, *inter alia,* preferably near the consumption sites in order to optimise costs. Another aim is to provide a generator in which the rotating part is suspended by levitation on the base, so as to reduce friction and friction-related losses..

## Description

This invention patent refers to a wind power turbine that uses wind as energy source to change it into electrical power.

Several wind power generation equipment are known, which typically have provisions for a tower in which a large-diameter rotor is arranged so as to transmit its turn to an electrical generator by transmission means.

Several improvements have been implemented over time to enable the rotor to be positioned properly to receive front airflow, as well as enhancements in the internal transmission system, aimed to improving the system efficiency.

One of the disadvantages of such system is that it requires that the equipment provides mechanical transmission means to enable the activation of the electrical generator.

Another disadvantage is the equipment construction cost due to the size of the tower and the pieces of equipment incorporated to them.

This patent has the purpose of providing an electrical generator driven by wind energy, which can be installed at locations where there is more regular airflow, and that can be placed on the ground or sea platforms, preferably, when placed on the ground, being arranged on the top of hills, mountains, in valleys and other places preferably close to the consumer points in order to optimizing its costs.

Another purpose is achieving a generator that operates with its turning region levitating in relation to its base, so as to reduce friction, and thus the resulting losses.

For better comprehension, the attached drawings illustrate the arrangement, namely:

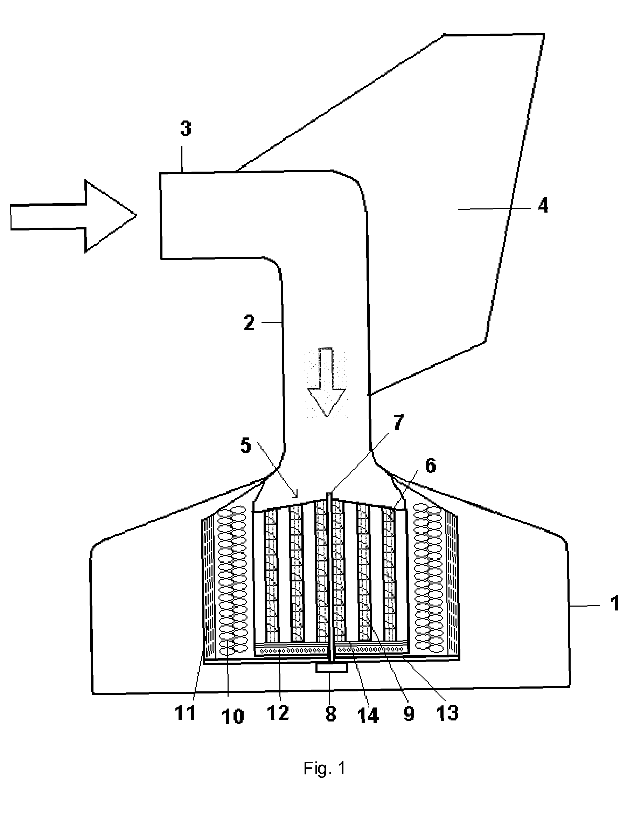

Figure 1.- shows a view in schematic section of the wind turbine and its internal equipment.

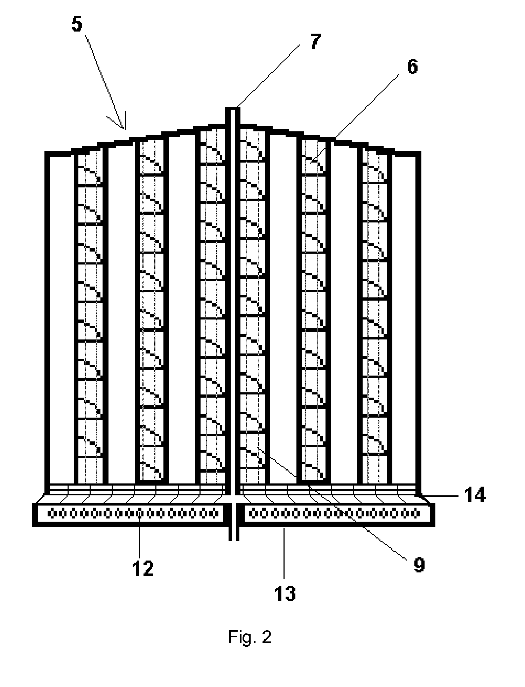

Figure 2.- shows schematic view of the turbine and induction generator assembly.

According to the attached illustrations and their details, the assembly is comprised by closed structure (1) provided in its top by a vertical duct (2) connected to a horizontal nozzle (3), which is oriented in the wind flow direction by the wind vane (4). One turbine (5) with blades (6) is arranged aligned with the duct (2) and inside the structure (1). It has a central shaft (7), supported by the base (8), and the induced generator (9) is arranged around the turbine periphery (5) to induce electrical current in the electromagnet and its coils (10), which are supported by the electromagnet fastening walls (11).

The assembly formed by the turbine (5) and induced generator (9) is mounted on a base formed by a set of rollers (12) that slide onto a circular rail (13).

Also, the turbine (5) and induced generator (9) assembly has on its base a circular region (14) fitted with reverse polarity magnets, which enables the magnetic levitation of the referred assembly.

The equipment could be provided with control means so as to control the rotation of the turbine (5) and induced generator (9) assembly in order to prevent strong winds from impairing its operation, as already occurs with other turbine types, including weather vanes.

Based on this construction, the turbine (5) and induced generator (9) assembly turns driven by the wind channeled by the nozzle (3) and duct (2), inducing current in the coil (10), so as to generate electrical power, which flows partially to feed the magnet (14) to levitate the referred assembly, thus eliminating its friction and improve its performance.

## Claims

1. "WIND ENERGY GENERATOR ON A WIND-HARNESSING PLATFORM", **characterized by** the fact of being comprised by closed structure (1) provided in its top by a vertical duct (2) connected to a horizontal nozzle (3), which is oriented in the wind flow direction by the wind vane (4). One turbine (5) with blades (6) is arranged aligned with the duct (2) and inside the structure (1). It has a central shaft (7), supported by the base (8), and the induced generator (9) is arranged around the turbine periphery (5) to induce electrical current in the electromagnet and its coils (10), which are supported by the electromagnet fastening walls (11)..

2. "WIND ENERGY GENERATOR ON A WIND-HARNESSING PLATFORM", according to the previous claim, **characterized by** the fact that the assembly formed by the turbine (5) and induced generator (9) is mounted on a base formed by a set of rollers (12) that slide onto a circular rail (13).

3. "WIND ENERGY GENERATOR ON A WIND-HARNESSING PLATFORM", according to the previous claims, **characterized by** the fact that the turbine (5) and induced generator (9) assembly has on its base a circular region (14) fitted with reverse polarity magnets.

4. "WIND ENERGY GENERATOR ON A WIND-HARNESSING PLATFORM", according to the claims 1 and 3, **characterized by** the fact that the turbine (5) and induced generator (9) assembly levitates in relation to its base.
